# EUROPÄISCHE PATENTSCHRIFT

(11) **EP 2 276 944 B1**
(45) Veröffentlichungstag und Bekanntmachung des Hinweises auf die Patenterteilung: **23.11.2011**
(21) Anmeldenummer: 09731219.3
(22) Anmeldetag: 02.04.2009
(51) Int. Cl.: F16D 55/2265, F16D 55/00, F16J 3/04

(54) **ANORDNUNG EINES FALTENBALGS AN EINEM FÜHRUNGSHOLM EINER SCHEIBENBREMSE**
ARRANGEMENT OF A BELLOW ON A GUIDE MANDREL OF A DISC BRAKE
DISPOSITION D'UN SOUFFLET SUR UNE TIGE D'UN FREIN À DISQUE

(30) Priorität: 11.04.2008 DE 102008018468
(43) Veröffentlichungstag der Anmeldung: 26.01.2011
(73) Patentinhaber: KNORR-BREMSE Systeme für Nutzfahrzeuge GmbH, 80809 München (DE)
(72) Erfinder: GRUBER, Markus, 85560 Ebersberg (DE); RAFFIN, Christian, 85630 Grasbrunn (DE)
(74) Vertreter: Mattusch, Gundula
(86) Internationale Anmeldenummer: PCT/EP2009/002397
(87) Internationale Veröffentlichungsnummer: WO 2009/124685

(56) Entgegenhaltungen:
- DE-A1- 10 341 095
- GB-A- 2 296 946
- US-A1- 2002 050 428

## Beschreibung

Die Erfindung betrifft eine Anordnung eines Faltenbalgs an einem Führungsholm einer Scheibenbremse nach dem Oberbegriff des Anspruchs 1, siehe DE-A-10341095.

Zum Schutz der Führungsholme, auf denen beispielsweise der Bremssattel einer Schiebesattel-Scheibenbremse verschiebbar gelagert ist, sind Faltenbälge vorgesehen, die jeweils endseitig am Führungsholm und an dem relativ dazu bewegbaren Bauteil, beispielsweise dem genannten Bremssattel, befestigt sind. Hierdurch wird verhindert, dass Schmutz in den Gleitbereich eindringt und damit die Gleiteigenschaften herabgesetzt bzw. zerstört werden. Dies gilt gleichermaßen für Feuchtigkeit, die ansonsten eindringen und zu Korrosionsschäden führen könnte.

Der Faltenbalg ist formschlüssig am Führungsholm gehalten, wozu er an dem zugeordneten Ende einen Dichtring, vorzugsweise einen Quadring aufweist, der in einer umlaufenden Nut des Führungsholms einliegt und in dieser Position durch einen aufgesetzten Haltering gesichert ist.

Dabei weist der Haltering eine Anlageschulter auf, an der sich der Dichtring radial abstützt.

Dabei wird der Dichtring derart fest in die Nut gepresst, dass praktisch eine luftdichte Anlage entsteht, wodurch sich jedoch erhebliche Nachteile ergeben.

Beim Verschieben des Bremssattels relativ zum Führungsholm verändert sich nämlich das Volumen des vom Faltenbalg umschlossenen Bereichs. Die Luft kann jedoch nicht nach außen entweichen und bläht den Faltenbalg entsprechend auf.

Insbesondere bei einem Wechsel eines Bremsbelages, bei dem in sehr kurzer Zeit der Bremssattel entlang dem Führungsholm verschoben wird, kann es vor allem beim Montieren eines folgenden, neuen Bremsbelages zu einer Beschädigung des Faltenbalgs kommen.

In diesem Fall ist ein Austausch des Faltenbalgs zwingend geboten, da ansonsten dessen Schutzfunktion nicht gewährleistet ist.

Darüber hinaus ergeben sich auch rein funktional Probleme durch den luftdichten Anschluss. So wirkt ein aufgeblähter Faltenbalg wie eine Luftfeder, die den Bremsbelag an eine Bremsscheibe der Scheibenbremse drückt, so dass während des Fahrbetriebs der Bremsbelag ständig an der Bremsscheibe anliegt, was zum Heißlaufen der Bremse führen kann, mit den sich daraus ergebenden, insbesondere sicherheitsrelevanten Problemen.

Der Erfindung liegt die Aufgabe zugrunde, eine Anordnung der gattungsgemäßen Art so weiterzuentwickeln, dass die Funktions- bzw. Betriebssicherheit der Scheibenbremse insgesamt verbessert wird.

Diese Aufgabe wird durch eine Anordnung mit den Merkmalen des Anspruchs 1 gelöst.

Durch diese Anordnung des Faltenbalgs wird gewährleistet, dass bei dessen Zusammenschieben ein Druckluftausgleich erfolgt, da die sich ergebende sozusagen überschüssige Luftmenge problemlos entweichen kann.

Insbesondere bei dem zum Stand der Technik beschriebenen schnellen Zusammenschieben des Faltenbalges, wie es typisch ist bei einem Wechsel der Bremsbeläge, findet nun ein sofortiger Druckausgleich statt, zwischen dem vom Faltenbalg eingeschlossenen Innenraum zur Umgebung.

Dabei fungiert der Luftdurchlass wie ein Rückschlagventil, wobei nach einem erfolgten Druckausgleich der Dichtungsring wieder vollumfänglich in der Nut einliegt.

Nach einem vorteilhaften Gedanken der Erfindung ist vorgesehen, die Anlageschulter des Halterings, die am Dichtring anliegt, partiell auszusparen, so dass die Anlageschulter in diesen Bereichen keine Abstützung für den Dichtring bildet.

Hierdurch kann der Dichtring bei einem entstehenden Überdruck im Innenraum des Faltenbalgs von Grund der Nut des Führungsholms abheben und zwar so weit und solange, bis der genannte Druckausgleich erfolgt ist.

Der Grenzdruck für den Druckabbau kann durch die Geometrie der Aussparungen an der Anlageschulter bestimmt werden. Je größer die Aussparungen sind, desto geringer ist der Überdruck, der sich im Innenraum des Faltenbalgs bilden kann.

Das beschriebene Belagschleifen wird nun ebenso wirkungsvoll verhindert wie das Aufblähen der Faltenbälge beim Belagwechsel, wodurch die Gefahr einer Beschädigung der Bälge praktisch ausgeschlossen ist. Da im Übrigen der Faltenbalg im Betrieb lediglich gestaucht, nicht jedoch gestreckt wird, d.h., dass durch die Erfindung lediglich die Entstehung eines erhöhten Innendrucks vermieden werden muss, sind Vorkehrungen, die einen Druckausgleich bei einer Streckung des Faltenbalges erforderlich machen würden, nicht vorzusehen, so dass die Realisierung der Erfindung mit äußerst einfachen Mitteln möglich ist.

Dies geht selbstverständlich einher mit einem sehr gering zu haltenden und daher äußerst kostengünstigen Fertigungs- und Montageaufwand, so dass die Erfindung im Grunde kostenneutral zu realisieren ist.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:

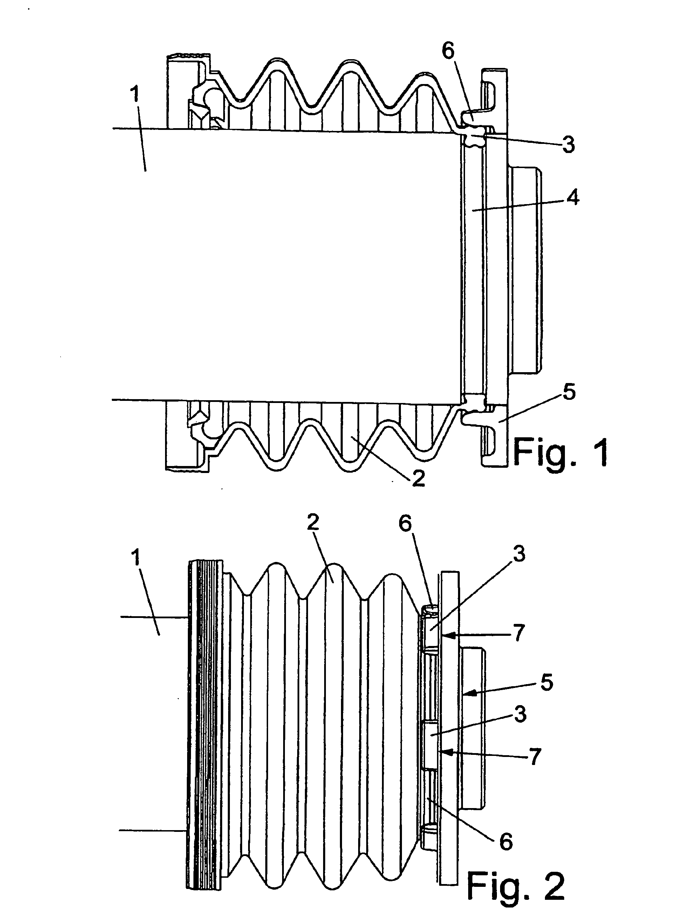

- Figur 1: eine erfindungsgemäße Anordnung in einer Funktionsstellung in einem Längsschnitt
- Figur 2: die Anordnung nach Figur 1 in einer Draufsicht
- Figur 3: die Anordnung in einer weiteren Funktionsstellung ebenfalls in einem Längsschnitt.

In den Figuren ist eine Anordnung eines Faltenbalgs 2 an einem Führungsholm 1 einer Scheibenbremse, insbesondere eines Nutzfahrzeuges dargestellt, wobei der Faltenbalg 2 mit einem einen Dichtring 3 aufweisenden Ende in einer umlaufenden Nut 4 des Führungsholms 1 einliegt.

Dabei ist der Dichtring 3 als Quadring ausgebildet, der im Vergleich zu einem 0-Ring in radialer Richtung leichter aufweitbar ist.

Der Dichtring 3 wird mittels eines Halterings 5 in die Nut 4 gepresst, wobei der Haltering 5 umlaufend abschnittsweise Anlageschulter 6 besitzt, die an dem Dichtring 3 anliegen und diesen gegen den Grund der Nut 4 drücken.

Im Anlagebereich des Dichtrings 3 am Grund der Nut 4 ist erfindungsgemäß bei betriebsbedingter Volumenreduzierung des vom Faltenbalg 2 und dem Führungsholm 1 eingeschlossenen Raums ein Luftdurchlass geschaffen, der im Beispiel dadurch bewirkt wird, dass die Anlageschulter 6 abständig zueinander angeordnet sind und zwischen sich jeweils eine Ausnehmung 7 bilden, die für den Dichtring 3 die Möglichkeit schaffen sich radial auszudehnen.

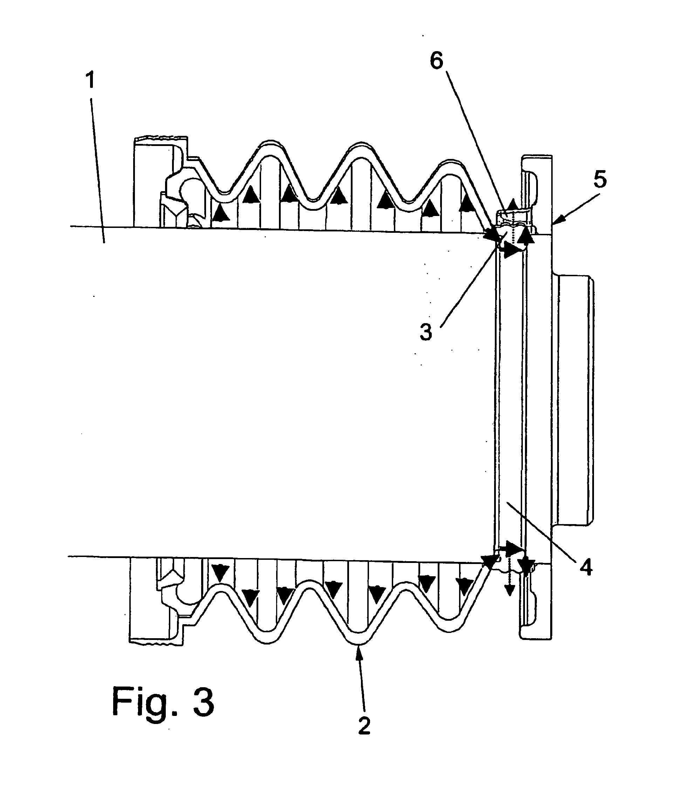

Dies ist in der Figur 3 durch Pfeil-Darstellungen erkennbar, wobei die an der Innenwandung des Faltenbalgs 2 radial ausgerichteten Pfeile den Innendruck und der an der Anlageschulter 6 positionierte Pfeil die Aufweitrichtung des Dichtrings 3 wiedergeben, während der Strömungsverlauf zwischen dem aufgeweiteten Dichtring 3 und der Nut 4 durch die in diesem Bereich angedeuteten Pfeile symbolisch dargestellt ist.

Dabei sind die gleichmäßig über den Umfang verteilten Aussparungen 7 in ihrer umfänglichen Erstreckung gleich lang und entsprechen in ihrer Breite zumindest der Breite des Dichtringes 3.

## Patentansprüche

1. Anordnung eines Faltenbalgs (2) an einem Führungsholm (1) einer Scheibenbremse, insbesondere eines Nutzfahrzeuges, wobei der Faltenbalg (2) mit einem einen Dichtring (3), insbesondere einen Quadring aufweisenden Ende in einer umlaufenden Nut (4) des Führungsholms (1) einliegt und dabei durch einen aufgesetzten Haltering (5) in die Nut (4) gedrückt ist, **dadurch gekennzeichnet, dass** im Anlagebereich des Dichtrings (3) am Grund der Nut (4) bei betriebsbedingter Volumenreduzierung des vom Faltenbalg (2) und dem Führungsholm (1) eingeschlossenen Raums ein Luftdurchlass geschaffen ist.

2. Anordnung nach Anspruch 1, **dadurch gekennzeichnet, dass** der Haltering (5) abständig zueinander angeordnete Anlageschulter (6) aufweist, die sich außenseitig am Dichtring (3) abstützen, wobei jeweils zwei Anlageschultern (6) eine in diesem Bereich den Dichtring (3) freilegende Aussparung (7) begrenzen.

3. Anordnung nach Anspruch 1 oder 2, **dadurch gekennzeichnet, dass** mindestens eine Aussparung (7) vorgesehen ist.

4. Anordnung nach einem der vorhergehenden Ansprüche, **dadurch gekennzeichnet, dass** mehrere Aussparungen (7) gleichmäßig über den Umfang verteilt vorgesehen sind.

5. Anordnung nach einem der vorhergehenden Ansprüche, **dadurch gekennzeichnet, dass** die Aussparungen (7) in ihrer umfänglichen Erstreckung gleich lang sind.

6. Anordnung nach einem der vorhergehenden Ansprüche, **dadurch gekennzeichnet, dass** die Aussparungen (7) in ihrer Breite zumindest der Breite des Dichtringes (3) entsprechen.

## Claims

1. An arrangement of a bellows (2) on a guide bar (1) of a disk brake, in particular of a utility vehicle, with the bellows (2) lying with an end which has a sealing ring (3), in particular a quad ring, in an encircling groove (4) of the guide bar (1) and, here, being pressed into the groove (4) by a retaining ring (5) placed thereon, **characterized in that**, in the event of an operationally induced reduction in volume of the space enclosed by the bellows (2) and the guide bar (1), an air passage is created in the contact region of the sealing ring (3) against the base of the groove (4).

2. The arrangement as claimed in claim 1, **characterized in that** the retaining ring (5) has contact shoulders (6) arranged spaced apart from one another, which contact shoulders (6) are supported at the outside on the sealing ring (3), with in each case two contact shoulders (6) delimiting a cutout (7) which exposes the sealing ring (3) in said region.

3. The arrangement as claimed in claim 1 or 2, **characterized in that** at least one cutout (7) is provided.

4. The arrangement as claimed in one of the preceding claims, **characterized in that** a plurality of cutouts (7) are provided distributed uniformly over the circumference.

5. The arrangement as claimed in one of the preceding claims, **characterized in that** the cutouts (7) are of equal length in terms of their circumferential extent.

6. The arrangement as claimed in one of the preceding claims, **characterized in that** the cutouts (7) correspond, in terms of their width, at least to the width of the sealing ring (3).

## Revendications

1. Arrangement d'un soufflet à une tige de guidage (1) d'un frein à disque, en particulier dans un véhicule utilitaire, dans lequel ledit soufflet (2) se trouve en prise, par une extrémité munie d'une bague d'étanchéité (3), en particulier d'une bague quad, dans une rainure périphérique (4) de ladite tige de guidage (1), en étant pressé dans ladite rainure (4) par une bague de retenue (5) y placée, **caractérisé en ce qu'**un passage d'air est formé dans la zone de support de ladite bague d'étanchéité (3) au fond de ladite rainure (4), quand le volume de l'espace entouré par ledit soufflet (2) et ladite tige de guidage (1) est réduit en vertu du fonctionnement.

2. Arrangement selon la revendication 1, **caractérisé en ce que** ladite bague de retenue (5) est munie des épaules d'appui (6) disposées à un écart l'un de l'autre, qui s'appuient sur ladite bague d'étanchéité (3) du côté extérieur, à deux épaules d'appui respectives (6) définissant un évidement (7) libérant ladite bague d'étanchéité (3) dans cette région.

3. Arrangement selon la revendication 1 ou 2, **caractérisé en ce qu'**au moins un évidement (7) est formé.

4. Arrangement selon une quelconque des revendications précédentes, **caractérisé en ce qu'**une pluralité d'évidements (7) est répartie régulièrement le long de la périphérie.

5. Arrangement selon une quelconque des revendications précédentes, **caractérisé en ce que** lesdits évidements (7) présentent une longueur égale le long de leur étendue périphérique.

6. Arrangement selon une quelconque des revendications précédentes, **caractérisé en ce que** la largeur desdits évidements (7) corresponde au moins à la largeur de ladite bague d'étanchéité (3).
